# EUROPEAN PATENT APPLICATION

(11) **EP 4 503 238 A1**
(43) Date of publication of application: **05.02.2025**
(21) Application number: 22964023.0
(22) Date of filing: 04.11.2022
(51) Int. Cl.: H01M 10/0587, H01M 10/42

(54) **ELECTRODE ASSEMBLY, FORMING METHOD, BATTERY CELL, BATTERY AND ELECTRICAL DEVICE**

(71) Applicant: Contemporary Amperex Technology (Hong Kong) Limited, Central, Central And Western District (HK)
(72) Inventor: XU, Hu, Ningde, Fujian 352100 (CN); JIN, Haizu, Ningde, Fujian 352100 (CN); ZHAO, Fenggang, Ningde, Fujian 352100 (CN); NIU, Shaojun, Ningde, Fujian 352100 (CN); ZENG, Yuqun, Ningde, Fujian 352100 (CN)
(74) Representative: Ran, Handong
(86) International application number: PCT/CN2022/129849
(87) International publication number: WO 2024/092714

(57) **Abstract**

Provided in the embodiments of the present application are an electrode assembly, a forming method, a battery cell, a battery and an electrical device. The electrode assembly comprises an electrode main body, a winding hole and a supporting bag body, wherein the winding hole penetrates the electrode main body in a first direction; the supporting bag body is arranged in the winding hole and is used for supporting the winding hole, and the supporting bag body comprises a flexible wall portion and an accommodating cavity formed by means of the enclosure of the flexible wall portion; and at least part of the accommodating cavity is internally provided with a filler, which is used for supporting the accommodating cavity. In the electrode assembly provided in the embodiments of the present application, the winding hole is not prone to collapsing, and thus the working stability and safety performance of the electrode assembly are improved.

## Description

### TECHNICAL FIELD

The present disclosure relates to the field of battery technology, and in particular relates to an electrode assembly, a forming method, a battery cell, a battery and an electrical apparatus.

### BACKGROUND

With a promotion of the concept of energy conservation and emission reduction, electricity is used as driving energy in more and more fields. Therefore, the demand for batteries in various fields is also increasing, and the development of battery technology is becoming increasingly important for the development of other fields.

However, in a prior electrode assembly, the strength of a winding hole formed by winding an electrode sheet and a separator of the electrode assembly is often small, resulting in the winding hole prone to collapse, and greatly affecting an operating stability and safety performance of the electrode assembly.

### SUMMARY

The present disclosure provides an electrode assembly, a forming method, a battery cell and an electrical apparatus, preventing the winding hole from collapsing to improve an operating stability and safety performance of the electrode assembly.

In a first aspect, some embodiments of the present disclosure provide an electrode assembly including an electrode body, a winding hole and a supporting capsule body. The winding hole is arranged to extend through the electrode body in a first direction. The supporting capsule body is provided within the winding hole, configured to support the winding hole, and includes a flexible wall and an accommodating cavity surrounded and defined by the flexible wall. At least part of the accommodating cavity is filled with fillers for supporting the accommodating cavity.

According to technical solutions of some embodiments of the present disclosure, the electrode assembly includes the electrode body, the winding hole and the supporting capsule body. Metal ions can move within the electrode body to generate current. The supporting capsule body includes the flexible wall and the accommodating cavity surrounded and defined by the flexible wall. The flexible wall has a certain degree of deformation ability, resulting in a certain degree of deformation ability of the accommodating cavity in shape and volume, and it is not easy for the flexible wall to damage the electrode body at the winding hole. At least part of the accommodating cavity is filled with fillers. The fillers are configured for supporting the accommodating cavity by changing the shape and volume of the accommodating cavity, enabling the supporting capsule body to have a certain structure strength. The winding hole passes through the electrode body in the first direction, and the supporting capsule body is provided inside the winding hole. The supporting capsule body with a certain structure strength can be configured for supporting the winding hole, preventing the electrode body from collapsing at the winding hole to improve the operating stability and safety performance of the electrode assembly.

In some embodiments, the supporting capsule body has a first end and a second end opposite to each other in the first direction, a first sealing portion is provided between the first end and the second end, and the accommodating cavity includes a supporting cavity and a buffer cavity that are not communicated with each other and located on two sides of the first sealing portion in the first direction, respectively; and the fillers are filled in the supporting cavity, and the first sealing portion is configured for communicating the supporting cavity with the buffer cavity when a pressure in the supporting cavity is greater than or equal to a preset pressure value. The fillers provided in the supporting cavity can change the shape and volume of the supporting cavity to support the supporting cavity, enabling the supporting capsule body to have a certain structure strength to support the winding hole. The first sealing portion provided between the supporting cavity and the buffer cavity can be configured for isolating the supporting cavity from the buffer cavity, so the supporting cavity and the buffer cavity are not communicated with each other under normal pressure. However, when the pressure in the supporting cavity is greater than the preset pressure value, the first sealing portion can be damaged and thus fail under the pressure, so the supporting cavity and the buffer cavity are communicated with each other, allowing at least some of the fillers in the supporting cavity to enter the buffer cavity, and thereby allowing the buffer cavity to share some of the pressure to reduce the pressure in the supporting cavity. Thus the possibility of breaking of the supporting capsule body due to excessive pressure is reduced, and the stability of the supporting capsule body is improved.

In some embodiments, the supporting capsule body further includes a second sealing portion located at the first end and/or the second end and configured for sealing and defining the supporting cavity and/or the buffer cavity, and a sealing strength of the second sealing portion is greater than that of the first sealing portion. The supporting cavity and/or the buffer cavity can be sealed by the second sealing portion provided at the first end and/or the second end. With the sealing strength of the second sealing portion set to be greater than that of the first sealing portion, the first sealing portion can be damaged and fail prior to the second sealing portion when the pressure inside the supporting cavity increases, thereby reducing the possibility of the second sealing portion being damaged and failed under pressure, making it difficult for the fillers inside the supporting capsule body to flow out of the second sealing portion, and improving the operating stability of the supporting capsule body.

In some embodiments, the supporting capsule body further includes a reinforcing portion protruding from and arranged on a side surface of the flexible wall toward the winding hole and/or the accommodating cavity. With the reinforcing portion protruding from the surface of the flexible wall, the supporting capsule body has good structure strength at the reinforcing portion, which makes the supporting capsule body not prone to rupture and can provide better support to the winding hole, and improves the operating stability of the supporting capsule body.

In some embodiments, the reinforcing portion extends along the first direction and/or along a peripheral direction of the supporting capsule body. With the reinforcing portion extending and forming along the first direction and/or along a peripheral direction of the supporting capsule body, the supporting capsule body has a good structure strength, which makes the supporting capsule body not prone to rupture; the reinforcing portion can provide better support to the winding hole along the first direction and/or the peripheral direction to improve the operating stability of the supporting capsule body.

In some embodiments, the reinforcing portion is in shape of at least one of a spiral shape or a wavy shape that surrounds a periphery of the supporting capsule body and extends along the first direction. With the reinforcing portion provided in shape of at least one of a spiral shape or a wavy shape, the supporting capsule body has a good structure strength, to provide better support to the winding hole along the first direction and the peripheral direction.

In some embodiments, the fillers are at least one of gas, liquid, or particle. With the fillers provided as at least one of gas, liquid, or particles, the fillers have good fluidity, the supporting capsule body can have good deformation ability is not prone to rupture. When the fillers are gas, the supporting capsule body can have a light weight, so as to reduce the influence of the supporting capsule body on the energy density of the electrode assembly.

In some embodiments, the fillers are at least one of fire extinguishing gases, electrolytes, electrolyte solvent, porous material particles, polymer matrix composite material particles, plastic particles, composite ultralight material particles, carbon fiber particles, ultralight gas gel particles or flame retardant particles. With the fillers arranged to include fire extinguishing gases and flame retardant particles, when the supporting capsule body is affected by the thermal runaway of the electrode body and rupture, the fillers including fire extinguishing gases and flame retardant particles can effectively reduce the degree of thermal runaway of the electrode body, make the electrode body not easy to further burn and cause fire, and improve the safety performance of the electrode assembly. With the fillers including the electrolyte or an electrolyte solvent, it is not easy for the fillers flowing out to affect the electrolyte after the support capsule body is ruptured, so the electrode assembly has good operating stability.

In some embodiment, the fillers are at least one of heptafluoropropane, mixed gases IG541, carbon dioxide, inert gases, aerosol fire extinguishing substances, electrolytes, electrolyte solvents, porous foam particles, porous ceramic particles, polymer matrix composite particles, polypropylene particles, polyethylene particles, polyphenylene sulfide particles, composite ultralight material particles, carbon fiber particles, carbon gas gel particles, polypropylene flame retardant particles, polycarbonate flame retardant particles, adhesive flame retardant particles, organic phosphide particles, halogenated carbonate particles, phosphazene compound particles, phosphate ester particles, or dimethyl methyl phosphate particles. With the material of the fillers reasonably set, the fillers can not only have good fluidity, but also effectively reduce the degree of thermal runaway of the electrode body and the effect of the fillers on the electrolyte, thereby improving the operating stability and safety performance of the electrode assembly.

In some embodiments, a diameter of the supporting capsule body is greater than or equal to 92% of a diameter of the winding hole and less than or equal to a diameter of the winding hole. With the diameter of the supporting capsule body reasonably set, not only can the supporting capsule body have good support effect, but also a certain space can be reserved between the supporting capsule body and the electrode body, making it difficult for the electrode body to expand and compress with the supporting capsule body during operation.

In a second aspect, some embodiments of the present disclosure provides a forming method for forming an electrode assembly according to any one of the above embodiments, the forming method including: connecting the flexible wall of the supporting capsule body in a first state to a side surface of the electrode body, the supporting capsule body in the first state being not filled with the fillers; winding the electrode body to define the winding hole extending along the first direction, to position the supporting capsule body inside the winding hole; filling the accommodating cavity with the fillers to deform the supporting capsule body into a second state, and a size of the supporting capsule body in the second state being larger than that in the first state; and sealing the accommodating cavity.

According to technical solutions of some embodiments of the present disclosure, due to the flexible wall of the supporting capsule body having a certain deformation ability, the supporting capsule body can at least have the first state and the second state. In the first state, due to the lack of fillers in the supporting capsule body, the supporting capsule body can have a relatively flat shape in the first state. In the second state, due to the fillers filled inside the supporting capsule body, the supporting capsule body can have a relatively bulging shape in the second state. The supporting capsule body can be connected to the side surface of the electrode body in a relatively flat shape in the first state, so the electrode body can be easily wound to define the winding hole, and the supporting capsule body is not prone to damage the electrode body. When the supporting capsule body in the first state is located inside the formed winding hole, the fillers are then filled into the accommodating cavity, causing the accommodating cavity to transition from the first state to the second state, so the supporting capsule body in a bulged shape has a certain structure strength, allowing the supporting capsule body to support the winding hole, making the electrode body at the winding hole less prone to collapse, thereby improving the operating stability and safety performance of the electrode assembly.

In some embodiments, in the step of filling the accommodating cavity with the fillers to deform the supporting capsule body into a second state, and a size of the supporting capsule body in the second state being larger than that in the first state: the supporting capsule body is provided with an injection opening at the first end and/or the second end, through which the fillers are filled into the accommodating cavity, wherein the fillers are gas, and a pore size of the injection opening is smaller than a radial size of the accommodating cavity in the second state. When the fillers are gas, with the pore size of the injection opening being smaller than the radial size of the accommodating cavity in the second state, it is difficult for gas to flow out of the accommodating cavity from the injection opening with a smaller size when filling the accommodating cavity through the injection opening, resulting in a higher filling efficiency when filling the accommodating cavity through the injection opening.

In some embodiments, in the step of filling the accommodating cavity with the fillers to deform the supporting capsule body into a second state, and a size of the supporting capsule body in the second state being larger than that in the first state: the supporting capsule body is provided with an injection opening at the first end and/or the second end, through which the fillers are filled into the accommodating cavity, wherein the fillers are liquids and/or particles, the injection opening is located outside the winding hole, and a pore size of the injection opening is larger than a radial size of the accommodating cavity in the second state; in the step of sealing the accommodating cavity, the injection opening is sealed and located within the winding hole. When the fillers are liquids and/or particles, with the pore size of the injection opening being larger than the radial size of the accommodating cavity in the second state, it is easier for liquids and/or particles to be filled into the accommodating cavity through the injection opening with the larger size when the fillers are filled into the accommodating cavity through the injection opening, thereby improving the filling efficiency of the liquids and/or particles. With the injection opening set inside the winding hole after sealing the injection opening, the supporting capsule body is not prone to extend from the winding hole out of the electrode body, making it less likely for the supporting capsule body to interfere with other devices outside the electrode body.

In a third aspect, some embodiments of the present disclosure provide a battery cell including the electrode assembly according to any one of the above embodiments.

In a fourth aspect, some embodiments of the present disclosure provide a battery including multiple battery cells in any one of the above embodiments.

In a fifth aspect, some embodiments of the present disclosure provide an electrical apparatus including a battery according to any one of the above embodiments for providing electrical energy.

### BRIEF DESCRIPTION OF THE DRAWINGS

In order to illustrate more clearly technical solutions of embodiments of the present disclosure, drawings that need to be used in embodiments of the present disclosure will be briefly introduced below. It is obvious that the drawings described below are only some embodiments of the present disclosure, and for those skilled in the art, other drawings can also be obtained according to the drawings without creative labor.
FIG. 1 is a schematic structural diagram of a vehicle provided in some embodiments of the present disclosure;
FIG. 2 is a schematic exploded structural diagram of a battery provided in some embodiments of the present disclosure;
FIG. 3 is a schematic exploded structural diagram of a battery cell provided in some embodiments of the present disclosure;
FIG. 4 is a schematic sectional structural diagram of a battery cell provided in some embodiments of the present disclosure;
FIG. 5 is a schematic sectional structural diagram of an electrode assembly provided in some embodiments of the present disclosure;
FIG. 6 is a schematic sectional structural diagram of an electrode assembly provided in other embodiments of the present disclosure;
FIG. 7 is a schematic structural diagram of a supporting capsule body provided in some embodiments of the present disclosure;
FIG. 8 is a schematic sectional structural diagram of a supporting capsule body along a first direction provided in some embodiments of the present disclosure;
FIG. 9 is a schematic sectional structural diagram of a supporting capsule body along a first direction provided in some embodiments of the present disclosure;
FIG. 10 is a schematic structural diagram of a supporting capsule body provided in other embodiments of the present disclosure;
FIG. 11 is a schematic flowchart of a forming method in some embodiments of the present disclosure;
FIG. 12 is a schematic structural diagram of an electrode assembly when a supporting capsule body is in a first state in some embodiments of the present disclosure;
FIG. 13 is a schematic structural diagram of an electrode assembly when a supporting capsule body is in a second state in some embodiments of the present disclosure;
FIG. 14 is a schematic flowchart of a forming method in other embodiments of the present disclosure;
FIG. 15 is a schematic flowchart of a forming method in other embodiments of the present disclosure.

In the drawings, figures are not drawn to an actual scale.

Description of accompanying drawings:
Vehicle 1000;
Battery 100; Controller 200; Motor 300;
Battery cell 10; Top cover 20; Lower cover 30;
Housing 1;
End cap 2;
Electrode assembly 3; Electrode body 31; Winding hole 32; Supporting capsule body 33; First end 33a; Second end 33b; Flexible wall 331; Accommodating cavity 332; Supporting cavity 332a; Buffer cavity 332b; First sealing portion 333; Second sealing portion 334; Reinforcing portion 335;
First direction X.

### DETAILED DESCRIPTION

In order to make purposes, technical solutions and advantages of embodiments of the present disclosure more clear, the technical solutions in embodiments of the present disclosure will be described clearly in combination with drawings attached to embodiments of the present disclosure. Obviously, embodiments described are part, and not all of embodiments of the present disclosure. Based on embodiments in the present disclosure, all other embodiments obtained by those skilled in the art without creative work shall fall within the scope of protection in the present disclosure.

Unless otherwise defined, all technical and scientific terms used in the present disclosure have the same meaning as those normally understood by those skilled in the art. In the present disclosure, terms used in the description of the present disclosure are for purposes of describing specific embodiments only and are not intended to restrict the present disclosure. Terms "including" and "having" and any variation thereof in the description, claims and the above drawings of the present disclosure are intended to cover non-exclusive inclusion. Terms "first", "second", etc. in the description and claims or in the above drawings of the present disclosure are used to distinguish between different objects and are not used to describe a particular order or primary or secondary relationship.

Reference to "embodiments" in the present disclosure means that a particular feature, structure or characteristic described in conjunction with embodiments may be included in at least one embodiment of the present disclosure. The presence of the phrase at various points in the description does not necessarily refer to the same embodiment, nor is it a separate or alternative embodiment that is mutually exclusive with other embodiments.

In the description of the present disclosure, it should be noted that, unless otherwise stated or defined, terms "installation", "connected to", "connected with", "attachment" and the like are to be understood broadly, and may be, for example, a fixed connection, a detachable connection, or an integral connection; they can be connected directly or indirectly through an intermediate medium or an internal communication between two elements. The specific meaning of the above terms in the present disclosure can be understood by those skilled in the art according to actual circumstance.

The term "and/or" in the present disclosure is only an association relationship describing associated objects, indicating that there can be three kinds of relationships, for example, A and/or B, can mean: there is A alone, there is A and B simultaneously, and there is B alone. In addition, the character "/" in the present disclosure generally indicates that the associated objects are in an "or" relationship.

In embodiments of the present disclosure, the same reference sign represents the same part, and for brevity, a detailed description of the same part is omitted in different embodiments. It is understood that the thickness, length, etc. of various components in embodiments of the present disclosure as illustrated and the overall thickness, length, etc. of an integrated device are illustrative only and should not constitute any limitation to the present disclosure.

The term "a plurality of" as used in the present disclosure means more than two (including two).

Currently, from the development of the market situation, power batteries are used in more and more applications. Power batteries are not only used in energy storage power systems such as hydropower, firepower, wind power, and solar power stations, but also widely used in electric vehicles such as electric bicycles, electric motorcycles, and electric cars, as well as military equipment and aerospace and other multiple fields. With the continuous expansion of the application field of power batteries, this market demand is also constantly expanding.

The applicants note that as the amount of batteries gradually increases, the operating stability and safety performance of an electrode assembly become increasingly important. The applicants have conducted research and found that in the prior electrode assembly, the strength of the winding hole formed by the electrode sheet and the separator of the electrode assembly is often small, which makes it easy for the electrode assembly to collapse at the winding hole during operation, greatly affecting the stability and safety performance of the electrode assembly.

In order to prevent the collapse at the winding hole of the electrode assembly, improve the operating stability and safety performance of the electrode assembly, the applicants have conducted research and found that a supporting capsule body can be provided in the winding hole to support the winding hole.

For example, the electrode assembly includes an electrode body, a winding hole, and a supporting capsule body. The supporting capsule body can be provided inside the winding hole to support the winding hole.

In such an electrode assembly, the electrode assembly includes the electrode body, the winding hole, and the supporting capsule body. The winding hole passes through the electrode body along a first direction. The supporting capsule body includes a flexible wall and an accommodating cavity formed by the flexible wall. At least part of the accommodating cavity is filled with fillers, which can make the supporting capsule body have a certain structure strength. The supporting capsule body with a certain structure strength and filled with the fillers is arranged in the winding hole and configured for supporting the winding hole, so the electrode body is not prone to collapse at the winding hole, improving the operating stability and safety performance of the electrode assembly.

Some embodiments of the present disclosure provide an electrode assembly, a battery cell having such electrode assembly, a battery having a plurality of such battery cells and an electrical apparatus using such battery. A battery cell having such electrode assembly may include a lithium-ion secondary battery cell, a lithium-ion primary battery cell, a lithium sulfur battery cell, a sodium lithium ion battery cell, a sodium ion battery cell, or a magnesium ion battery cell, etc. Embodiments of the present disclosure are not limited thereto. The battery cell can have flat, rectangular, or other shapes, and embodiments of the present disclosure are not limited thereto.

The battery referred to in the embodiments of the present disclosure refers to a single physical module including one or more battery cells to provide higher voltage and capacity. For example, the battery mentioned in the present disclosure may include a battery module or a battery pack, etc. A battery generally includes a box for encapsulating one or more battery cells. To some extent, the box can prevent liquids or other foreign objects from affecting the charging or discharging of battery cells. This type of battery can be used in various electrical apparatus, such as mobile phones, portable devices, laptops, electric trucks, electric toys, electric tools, electric vehicles, ships, and spacecraft. For example, spacecraft include airplanes, rockets, space shuttles, and spacecraft. Batteries are used to provide electricity to the aforementioned electrical devices.

Electrical apparatus in some embodiments of the present disclosure can be vehicles, mobile phones, portable devices, laptops, ships, spacecraft, electric toys, electric tools and the like. The vehicles can be fuel vehicles, gas vehicles or new energy vehicles. The new energy vehicles can be pure electric vehicles, hybrid vehicles, extended-range vehicles and the like. The spacecraft include planes, rockets, space shuttles, spaceships, and the like. The electric toys include stationary or mobile electric toys, such as game consoles, electric car toys, electric ship toys and electric aircraft toys. The electric tools include metal cutting electric tools, grinding electric tools, assembly electric tools and railway electric tools, such as electric drills, electric grinders, electric wrenches, electric screwdrivers, electric hammers, impact electric drills, concrete vibrators and planers. There are no special restrictions on the above-mentioned electrical devices embodiments of the present disclosure.

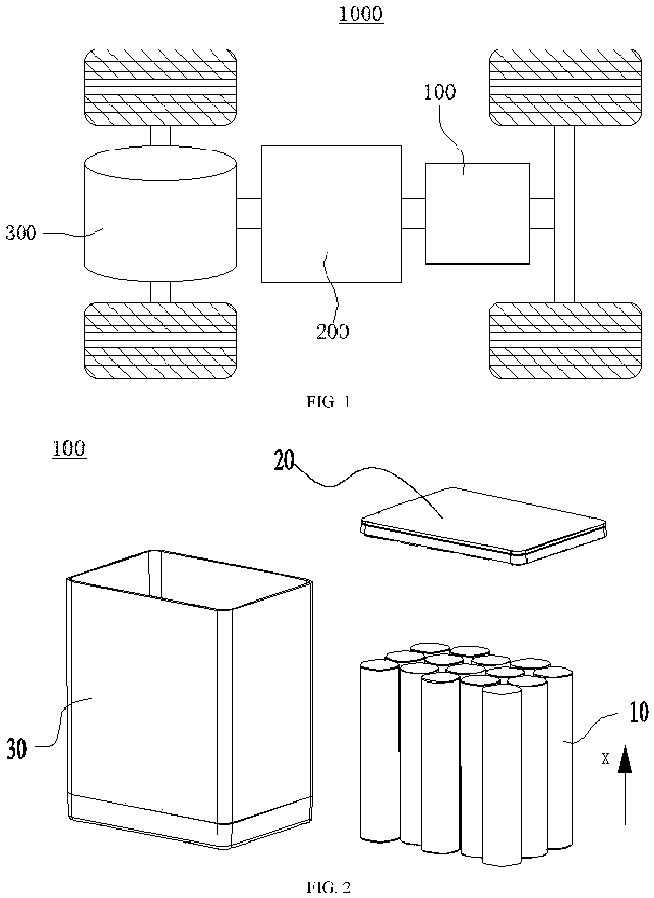

Please refer to FIG. 1, and FIG. 1 is a schematic structural diagram of a vehicle 1000 provided in some embodiments of the present disclosure. The vehicle 1000 can be a fuel vehicle, a gas vehicle or a new energy vehicle. The new energy vehicle can be a pure electric vehicle, a hybrid vehicle, an extended-range vehicle and the like. The battery 100 is provided in the interior of a vehicle 1000, and can be arranged in the bottom or in the head or back of the vehicle 1000. The battery 100 can be configured to provide electricity to the vehicle 1000, for example, the battery 100 can be used as an operating power source for the vehicle 1000. The vehicle 1000 may also include a controller 200 and a motor 300. The controller 200 is configured to control the battery 100 to provide electricity to the motor 300, for example, for electricity requirements for the starting, navigation and driving of the vehicle 1000.

In some embodiments of the present disclosure, the battery 100 may be used not only as an operating power source for the vehicle 1000, but also as a driving power source for the vehicle 1000, providing driving power to the vehicle 1000 in place or in part in place of fuel or natural gas.

Please refer to FIG. 2, and FIG. 2 is a schematic exploded structural diagram of a battery 100 provided in some embodiments of the present disclosure. In some embodiments, the battery 100 includes a box and a battery cell 10. In some embodiments, the box may include an upper cover 20 and a lower cover 30 that are mutually fitted. The upper cover 20 and the lower cover 30 jointly define an accommodating space for accommodating the battery cells 10. The lower cover 30 can have a hollow structure with an opening at one end, the upper cover 20 can have a plate structure, and the upper cover 20 closes an opening side of the lower cover 30 to jointly form the accommodating space. Both the upper cover 20 and the lower cover 30 may have a hollow structure with an opening at one side. An opening side of the upper cover 20 closes on an opening side of the lower cover 30. Of course, the upper cover 20 and the lower cover 30 can be in a variety of shapes, such as cylinders, cuboids, etc.

In the battery 100, a plurality of battery cells 10 can be provided. The plurality of battery cells 10 can be in a series connection, a parallel connection, or a mixed connection. The mixed connection means that the plurality of battery cells 10 are connected in series and parallel. The plurality of battery cells 10 can be directly in a series connection, a parallel connection, or a mixed connection, and then the entirety composed of the plurality of battery cells 10 is accommodated in the box. Of course, the battery 100 can be formed in the following way, i.e., the plurality of battery cells 10 can be in a series connection, a parallel connection, or a mixed connection to form a battery module first, then, a plurality of battery modules can be in a series connection, a parallel connection, or a mixed connection to form the entirety, and accommodated in the box. The battery 10 can also include other structures, for example, a bus bar component to realize electrical connection of the plurality of battery cells 10.

Each battery cell 10 can be a secondary battery or a primary battery, or a lithium sulfur battery, a sodium ion battery or a magnesium ion battery, etc., but is not limited thereto. The battery cell 10 can in cylindrical, flat, rectangular, or other shapes. However, for the sake of simplicity, the following embodiments are illustrated using a cylindrical battery cell as an example.

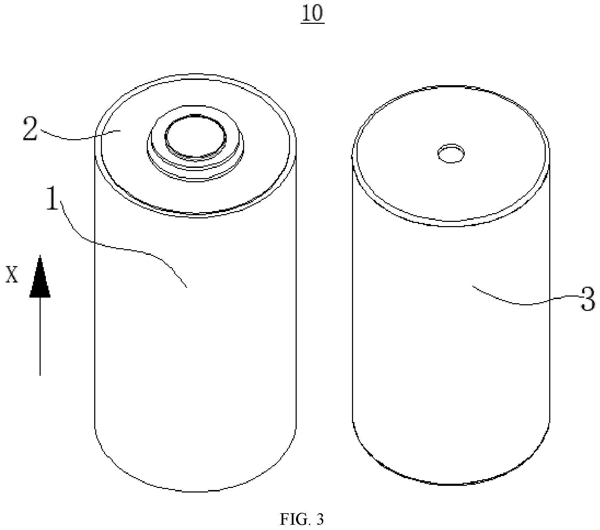

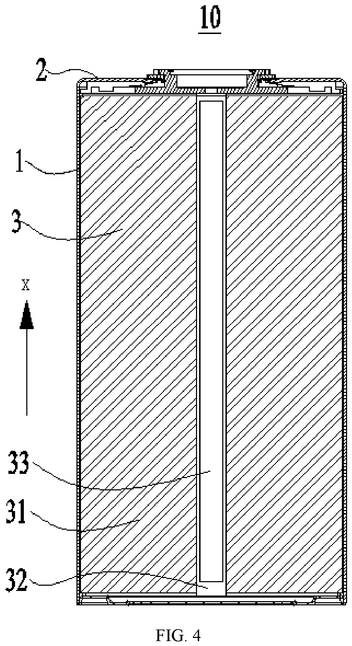

Please refer to FIG. 3 and FIG. 4. FIG. 3 is a schematic exploded structural diagram of a battery cell 10 provided in some embodiments of the present disclosure. FIG. 4 is a schematic sectional structural diagram of a battery cell provided in some embodiments of the present disclosure, and the X direction indicates a first direction X. The battery cell 10 refers to the smallest unit that makes up the battery 100. As shown in FIG. 3, the battery cell 10 may include a housing 1, an end cap 2, an electrode assembly 3, an adapter, and other functional components.

The end cap 2 refers to a component that closes the opening of the housing 1 to isolate the internal environment of the battery cell 10 from the external environment. Optionally, end cap 2 can be adapted to the housing 1 in shape match the housing 1. Optionally, the end cap 2 can be made of a material with certain hardness and strength (such as aluminum alloy), so the end cap 2 is not prone to deform under compression and collision, allowing the battery cell 10 to have higher structure strength and the safety performance. Functional parts such as electrode terminals can be installed on the end cap 2. The electrode terminals may be electrically connected with the electrode assembly 3 for the output or input of electrical energy from the battery cell 10. In some embodiments, the end cap 2 may also be provided with a pressure relief mechanism for releasing the internal pressure when the internal pressure or temperature of the battery cell 10 reaches a threshold. Various material may be used in the end cap 2, such as, copper, iron, aluminum, stainless steel, aluminum alloy, plastic, etc., and is not limited thereto in some embodiments of the present disclosure. In some embodiments, an insulating member may also be arranged inside the end cap 2, and can be configured to isolate the electrical connection part in the housing 1 from the end cap 2, so as to reduce the risk of short circuit. For example, the insulating member can be made of plastic, rubber, etc. In some embodiments, the end cap 2 is also provided with a liquids injection hole, and the electrolyte is injected into the housing 1 through the liquids injection hole.

The housing 1 and the end cap 2 together form the internal environment of the battery cell 10. The internal environment formed can be configured to accommodate the electrode assembly 3, electrolyte and other components. The housing 1 and the end cap 2 may be independent parts, and an opening may be arranged on the housing 1. The end cap 2 closes the opening to form the internal environment of the battery cell 10. Optionally, the end cap 2 and the housing 1 can be formed in an integrated part. Specifically, a common connecting surface can be formed between the end cap 2 and the housing 1 before other parts are positioned in the housing. When the housing 1 needs to be encapsulated, the end cap 2 closes the housing 1. The housing 1 can be of many shapes and sizes, such as cuboid shape, hexagonal prism, etc. Specifically, the shape of the housing 1 can be determined according to the specific shape and size of the electrode assembly 3. Various material can be used to make the housing 1, such as, copper, iron, aluminum, stainless steel, aluminum alloy, plastic, etc., and is not limited thereto in some embodiments of the present disclosure.

The electrode assembly 3 is a component of the battery cell 10 within which the electrochemical reaction occurs. The housing 1 may contain one or more electrode assemblies 3. The electrode assembly 3 can be formed mainly by the winding of the electrode sheet and the separator.

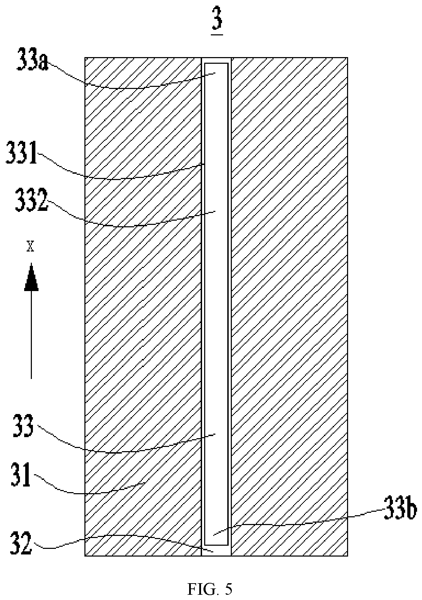

FIG. 5 is a schematic sectional structural diagram of an electrode assembly 3 provided in some embodiments of the present disclosure.

As shown in FIG. 5, some embodiments of the present disclosure provide an electrode assembly 3. The electrode assembly 3 includes an electrode body 31, a winding hole 32 and a supporting capsule body 33. The winding hole 32 is arranged to extend through the electrode body 31 in the first direction X. The supporting capsule body 33 is provided within the winding hole 32, configured to support the winding hole 32, includes a flexible wall 331 and an accommodating cavity 332 surrounded and defined by the flexible wall 331. At least part of the accommodating cavity 332 is filled with fillers for supporting the accommodating cavity 332.

In some embodiments, the electrode body 31 is mainly formed by a winding of electrode sheets (not shown in the figure) and the separator (not shown in the figure). The electrode sheets may include a positive electrode sheet and a negative electrode sheet. The separator is arranged between the positive electrode sheet and the negative electrode sheet, the positive electrode sheet and the negative electrode sheet are coated with the positive electrode active substance and the negative electrode active substance, respectively. In charging and discharging process, the positive electrode active substance and the negative electrode active substance react with the electrolyte to produce current.

In some embodiments, the winding hole 32 can be formed by the winding of the electrode body 31, and for example, the winding hole 32 can be formed by the winding of the electrode sheets and/or the separator of the electrode body 31a. The supporting capsule body 33 is arranged in the winding hole 32 to support the electrode sheets and/or the separator at the winding hole 32.

In some embodiments, the flexible wall portion 331 supporting the capsule body 33 can be connected with the inner surface of the winding hole 32, for example, the flexible wall portion 331 supporting the capsule body 33 can be connected with the electrode sheet and the separator of the electrode body 31, to limit the relative movement of the supporting capsule body 33 and the winding hole 32, improving the working stability of the electrode assembly 3.

The flexible wall 331 of the supporting capsule body 33 provided in the present disclosure can be made of any kind of flexible material that can be stable in the electrolyte and does not react with the electrolyte. For example, the material of the flexible wall 331 can be polyethylene terephthalate, polyethylene, polypropylene and other materials.

In some embodiments, the thickness of the flexible wall 331 can be greater than or equal to 0.1mm, so that the flexible wall 331 has a certain structure strength. In some embodiments, the thickness of the flexible wall 331 can be ranged from 0.5mm to 2mm.

According to the technical solutions of some embodiments of the present disclosure, the electrode assembly 3 includes the electrode body 31, the winding hole 32 and the supporting capsule body 33. Metal ions can move within the electrode body 31 to generate current. The supporting capsule body 33 includes the flexible wall 331 and the accommodating cavity 332 defined and surrounded by the flexible wall 331. The flexible wall 331 has a certain degree of deformation ability, resulting in a certain degree of deformation ability of the accommodating cavity 332 in shape and volume, and it is not easy for the flexible wall 331 to damage the electrode body 31 at the winding hole 32. At least part of the accommodating cavity 332 is filled with fillers. The fillers are configured for supporting the accommodating cavity 332 by changing the shape and volume of the accommodating cavity 332, enabling the supporting capsule body 33 to have a certain structure strength. The winding hole 32 passes through the electrode body 31 in the first direction X, and the supporting capsule body 33 is provided inside the winding hole 32. The supporting capsule body 33 with a certain structure strength can be configured for supporting the winding hole 32, preventing the electrode body 31 from collapsing at the winding hole 32 to improve the operating stability and safety performance of the electrode assembly 3.

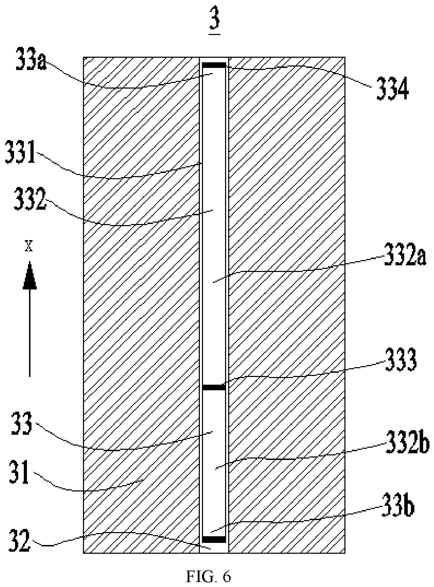

FIG. 6 is a schematic sectional structural diagram of an electrode assembly 3 provided in other embodiments of the present disclosure.

As shown in FIG. 6, in some embodiments, the supporting capsule body 33 has a first end 33a and a second end 33b opposite to each other in the first direction X, a first sealing portion 333 is provided between the first end 33a and the second end 33b, and the accommodating cavity 332 includes a supporting cavity 332a and a buffer cavity 332b that are not communicated with each other and located on two sides of the first sealing portion 333 in the first direction X, respectively. The fillers are filled in the supporting cavity 332a, and the first sealing portion 333 is configured for communicating the supporting cavity 332a with the buffer cavity 332b when a pressure in the supporting cavity 332a is greater than or equal to a preset pressure value.

In some embodiments, the size of the supporting cavity 332a on the first direction X is greater than the size of the buffer cavity 332b on the first direction X, so the supporting capsule body 33 has more volume for supporting the winding hole 32 to improve the supporting effect of the supporting capsule body 33.

In some embodiments, when the buffer cavity 332 is filled with the fillers and is not communicated with the supporting cavity 332a, the pressure in the buffer cavity 332b is smaller than that in the supporting cavity 332a; in case of the first sealing portion 333 being damaged and thus failing, at least some of the fillers in the supporting cavity 332a enters the buffer cavity 332b through the first sealing portion 333 that has failed, thereby allowing the buffer cavity 332b to share some of the pressure to reduce the pressure in the supporting cavity 332a. In some embodiments, the buffer cavity 332b can be filled with the fillers, or not filled with the fillers.

In some embodiments, the first sealing portion 333 can be formed by thermoplastic sealing or adhesive treatment of at least part of the flexible wall 331 between the first end 33a and the second end 33b, so the supporting cavity 332a and the buffer cavity 332b can be separated and not communicated with each other through the first sealing portion 333.

In some embodiments, the electrode body 31 may expand during operation, and the expanded electrode body 31 is prone to squeeze the supporting capsule body 33, which may increase the pressure in the supporting cavity 332a. In some embodiments, when the electrode body 31 expands to a certain extent, the pressure in the supporting cavity 332a can reach a preset pressure value, thus the first sealing portion 333 can be damaged and failed, and at least part of the fillers in the supporting cavity 332a can enter the buffer cavity 332b through the first sealing portion 333 that has failed, so as to reduce the pressure in the supporting cavity 332a and improve the operating stability and safety performance of the electrode assembly 3.

In some embodiments, the preset pressure value can be less than the pressure value in the supporting cavity 332a under which the flexible wall part 331 is close to rupture, so the first sealing portion 333 will be damaged and failed under pressure prior to the flexible wall part 331, thereby at least part of the fillers in the supporting cavity 332a entering into the buffer cavity 332b through the first sealing portion 333 that has failed to reduce the pressure in the supporting cavity 332a, reduce the possibility that the supporting capsule body 33 may rupture due to excessive pressure, and improve the operating stability of the supporting capsule body 33.

The fillers provided in the supporting cavity 332a can change the shape and volume of the supporting cavity 332a to support the supporting cavity 332a, enabling the supporting cavity 332a to have a certain structure strength to support the winding hole 32. The first sealing portion 333 provided between the supporting cavity 332a and the buffer cavity 332b can be configured for isolating the supporting cavity 332a from the buffer cavity 332b, so the supporting cavity 332a and the buffer cavity 332b are not communicated with each other under normal pressure. However, when the pressure in the supporting cavity 332a is greater than the preset pressure value, the first sealing portion 333 can be damaged and thus failed under the pressure, so the supporting cavity 332a and the buffer cavity 332b are communicated with each other, allowing at least some of the fillers in the supporting cavity 332a to enter the buffer cavity 332b through the first sealing portion 333 that has failed, and thereby allowing the buffer cavity 332b to share some of the pressure to reduce the pressure in the supporting cavity 332a. Thus the possibility of breaking of the supporting capsule body 33 due to excessive pressure is reduced, and the stability of the supporting capsule body 33 is improved.

Please refer to FIG. 6. In some embodiments, the supporting capsule body 33 further includes a second sealing portion 334 located at the first end 33a and/or the second end 33b, the second sealing portion 334 is configured for sealing and defining the supporting cavity 332a and/or the buffer cavity 332b, and a sealing strength of the second sealing portion 334 is greater than that of the first sealing portion 333. With the second sealing portion 334 located at the first end 33a and/or the second end 33b, the supporting cavity 332a and/or the buffer cavity 332b can be sealed through the second sealing portion 334.

In some embodiments, when the supporting cavity 332a and/or the buffer cavity 332b of the supporting capsule body 33 have not been sealed, an injection opening may be arranged at the first end 33a and/or the second end 33b of the supporting capsule body 33, and the fillers can be injected into the accommodating cavity 332 through the injection opening. The second sealing portion 334 may be configured to seal the injection opening to prevent the fillers flowing out of the supporting capsule body 33 from the accommodating cavity 332.

In some embodiments, the second sealing portion 334 can be formed by thermoplastic sealing or adhesive treatment of at least part of the flexible wall 331 between the first end 33a and the second end 33b, so the supporting cavity 332a and/or the buffer cavity 332b can be sealed through the second sealing portion 334.

In some embodiments, the preset pressure value can be less than the pressure value in the supporting cavity 332a under which the second sealing portion 334 is close to failure, so the first sealing portion 333 can be damaged failed prior to the second sealing portion 334 under pressure.

By the setting of the sealing strength of the second sealing portion 334 greater than that of the first sealing portion 333, when the pressure inside the supporting cavity 332a increases, the first sealing portion 333 can be damaged and failed before the second sealing portion 334, thereby reducing the possibility of the second sealing portion 334 being damaged and failed under pressure, making it difficult for the fillers inside the supporting capsule body 33 to flow out of the second sealing portion 334, and improving the operating stability of the supporting capsule body 33.

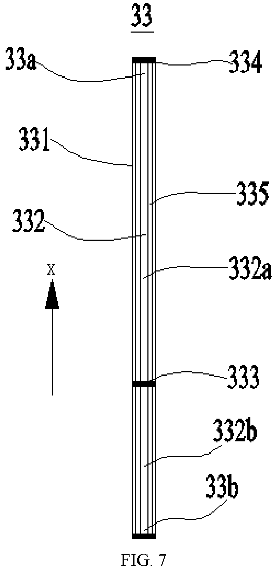

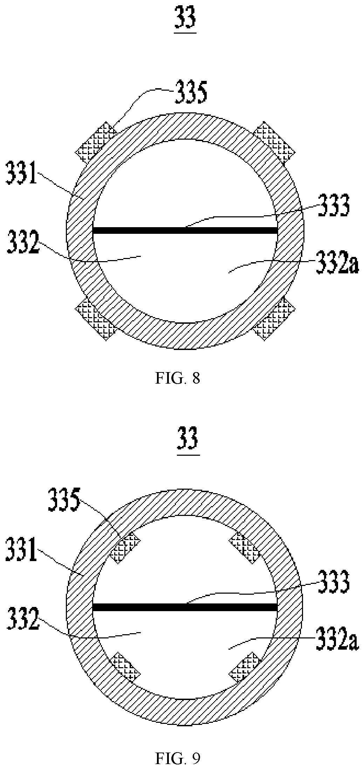

FIG. 7 is a schematic structural diagram of a supporting capsule body 33 provided in some embodiments of the present disclosure. FIG. 8 is a schematic sectional structural diagram of a supporting capsule body 33 along a first direction X provided in some embodiments of the present disclosure. FIG. 9 is a schematic sectional structural diagram of a supporting capsule body 33 along a first direction X provided in some embodiments of the present disclosure.

As shown in FIG. 6 to FIG. 9, in some embodiments, the supporting capsule body 33 further includes a reinforcing portion 335 protruding from and arranged on a side surface of the flexible wall 331 toward the winding hole 32 and/or the accommodating cavity 332.

In some embodiments, the same material as the flexible wall 331 can be welded on the surface of the flexible wall 331 to form the reinforcing portion 335 protruding from the surface of the flexible wall 331.

By the reinforcing portion 335 protruding from the surface of the flexible wall 331, the supporting capsule body 33 has good structure strength at the reinforcing portion 335, which makes the supporting capsule body 33 not prone to rupture and can provide better support to the winding hole 32, and improves the operating stability of the supporting capsule body 33.

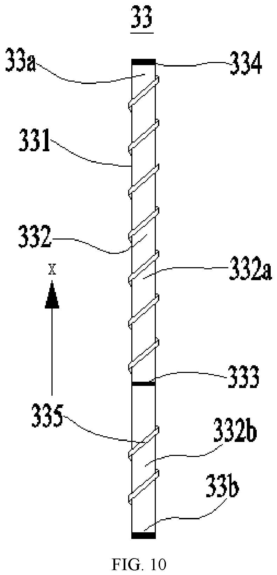

FIG. 10 is a schematic structural diagram of a supporting capsule body 33 provided in other embodiments of the present disclosure.

As shown in FIG. 7 to FIG. 10, in some embodiments, the reinforcing portion 335 extends along the first direction X and/or along a peripheral direction of the supporting capsule body 33.

In some embodiments, a plurality of reinforcing portions 335 extend and form along the first direction X and/or along a peripheral direction of the supporting capsule body 33, allowing the entire supporting capsule body 33 to have a good structure strength.

In some embodiments, in the extension direction of the reinforcing portion 335, the shape of the cross section of the reinforcing portion 335 may be at least one of a semicircle, a semi arc, a rectangle, or a polygon. With the shape of the cross section of the reinforcing part 335 that is reasonably set, a certain structural strength of the reinforcing portion 335 can be guaranteed.

By the reinforcing portion 335 extending along the first direction X and/or along the peripheral direction of the supporting capsule body 33, the supporting capsule body 33 has good structural strength, making it less prone to rupture. The reinforcing portion 335 can provide good support to the winding hole 32 in the first direction X and/or peripheral direction, improving the operating stability of the supporting capsule body 33.

As shown in FIG. 10, in some embodiments, the reinforcing portion 335 is in shape of at least one of a spiral shape or a wavy shape that surrounds a periphery of the supporting capsule body 33 and extends along the first direction X.

By the reinforcing portion 335 in shape of at least one of a spiral shape or a wavy shape, the supporting capsule body 33 can have a good structure strength to provide a good support to the winding hole 32 along the first direction X and the peripheral direction.

In some embodiments, the fillers are at least one of gas, liquid, or particles.

In some embodiments, when the fillers include the particles, the density of the particles may be less than or equal to 2500 milligrams per cubic centimeter, allowing the particles to have good flow performance within the accommodating cavity 332. In some embodiments, the density of the particles may be less than or equal to 1000 milligrams per cubic centimeter. In some embodiments, the density of the particles can be 100 milligrams per cubic centimeter.

In some embodiments, when the fillers include the particles, the compression rate of the particles may be less than 30%. In some embodiments, the particle size of the particles may be less than or equal to 3mm.

By the fillers provided as at least one of gas, liquid, or particles, the fillers has good fluidity, enabling the supporting capsule body 33 to have good deformation ability, making the supporting capsule body 33 less prone to rupture. When the fillers are provided as the gas, the supporting capsule body 33 can have a lighter weight, thereby reducing the impact of the supporting capsule body 33 on the energy density of the electrode assembly 3.

In some embodiments, the fillers are at least one of fire extinguishing gas, electrolyte, electrolyte solvent, porous material particles, polymer matrix composite material particles, plastic particles, composite ultralight material particles, carbon fiber particles, ultralight gas gel particles or flame retardant particles.

In some embodiments, the porosity of the particles may be greater than or equal to 5%, allowing the particles to have a lighter weight, thereby enabling the supporting capsule body 33 to have a lighter weight, in order to reduce the impact of the supporting capsule body 33 on the energy density of electrode assembly 3.

By the fillers provided to include fire extinguishing gases and flame retardant particles, when the supporting capsule body 33 ruptures due to the thermal runaway of the electrode body 31, the fillers including fire extinguishing gases and flame retardant particles can effectively reduce the degree of thermal runaway of the electrode body 31, making it less prone to further combustion and fire, and improving the safety performance of the electrode assembly 3. With the fillers provided to include electrolyte or electrolyte solvent, after the supporting capsule body 33 ruptures, the fillers flowing out not easily affect the electrolyte, thus allowing the electrode assembly 3 to have good operating stability.

In some embodiments, the fillers are at least one of heptafluoropropane, mixed gases IG541, carbon dioxide, inert gases, aerosol fire extinguishing substances, electrolytes, electrolyte solvents, porous foam particles, porous ceramic particles, polymer matrix composite particles, polypropylene particles, polyethylene particles, polyphenylene sulfide particles, composite ultralight material particles, carbon fiber particles, carbon gas gel particles, polypropylene flame retardant particles, polycarbonate flame retardant particles, adhesive flame retardant particles, organic phosphide particles, halogenated carbonate particles, phosphazene compound particles, phosphate ester particles, or dimethyl methyl phosphate particles.

By the material of the fillers that is reasonably set, the fillers can not only have good fluidity, but also effectively reduce the degree of thermal runaway of the electrode body 31 and the effect of the fillers on the electrolyte, thereby improving the operating stability and safety performance of the electrode assembly 3.

In some embodiments, the extension size of the supporting capsule body 33 in the first direction X may be less than or equal to the extension size of the electrode body 31 in the first direction X, making it difficult for the supporting capsule body to extend out of the electrode body 31 from the winding hole 32, making it less likely for the supporting capsule body to interfere with other devices outside the electrode body 31.

In some embodiments, a diameter of the supporting capsule body 33 is greater than or equal to 92% of a diameter of the winding hole 32 and less than or equal to a diameter of the winding hole 32.

By the diameter of the supporting capsule body 33 that is reasonably set, not only can the supporting capsule body 33 have good support effect, but also a certain space can be reserved between the supporting capsule body 33 and the electrode body 31, making it difficult for the electrode body 31 to expand and compress with the supporting capsule body 33 during operation.

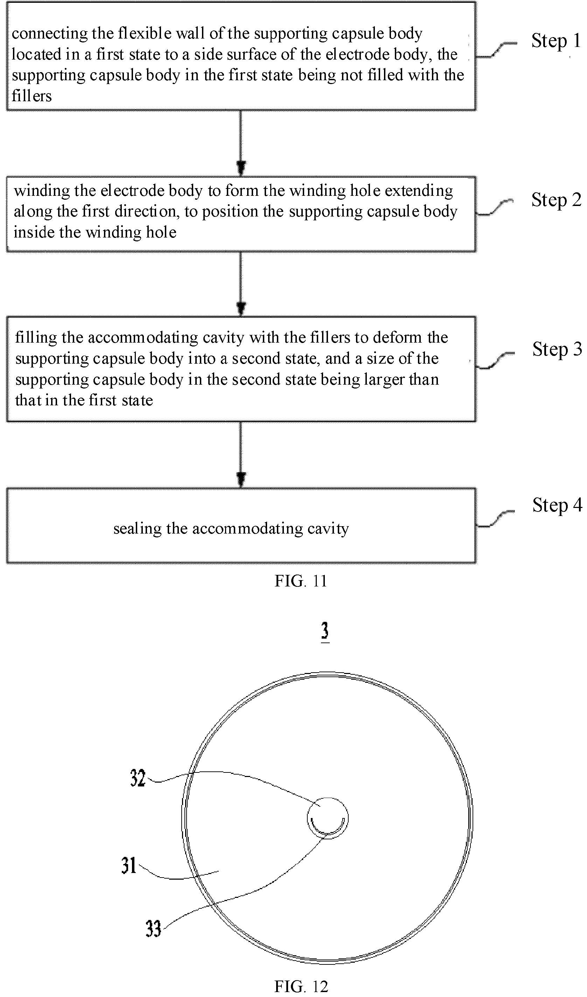

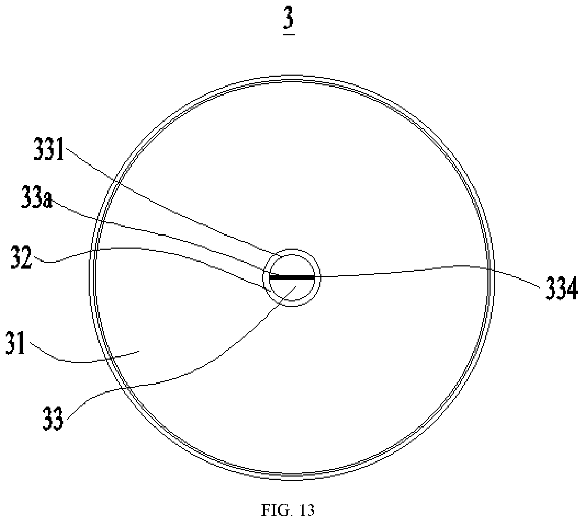

FIG. 11 is a schematic flowchart of a forming method in some embodiments of the present disclosure. FIG. 12 is a schematic structural diagram of an electrode assembly 3 when a supporting capsule body 33 is in a first state in some embodiments of the present disclosure. FIG. 13 is a schematic structural diagram of an electrode assembly 3 when a supporting capsule body 33 is in a second state in some embodiments of the present disclosure.

As shown in FIG. 11 and FIG. 12, in a second aspect, some embodiments of the present disclosure provide a forming method for forming the electrode assembly 3 in any of the aforementioned embodiments, the forming method includes:
at step 1, connecting the flexible wall 331 of the supporting capsule body 33 in a first state to a side surface of the electrode body 31, and the supporting capsule body 33 in the first state being not filled with the fillers;
at step 2, as shown in FIG. 12, winding the electrode body 31 to define the winding hole 32 extending along the first direction X, to position the supporting capsule body 33 inside the winding hole 32;
at step 3, as shown in FIG. 13, filling the accommodating cavity 332 with the fillers to deform the supporting capsule body 33 into a second state, and a size of the supporting capsule body 33 in the second state being larger than that in the first state; and
at step 4, sealing the accommodating cavity 332.

In the technical solutions of some embodiments of the present disclosure, due to the flexible wall 331 of the supporting capsule body 33 having a certain deformation ability, the supporting capsule body 33 can at least have the first state and the second state. In the first state, due to the lack of fillers in the supporting capsule body 33, the supporting capsule body 33 can have a relatively flat shape in the first state. In the second state, due to the fillers filled inside the supporting capsule body 33, the supporting capsule body 33 can have a relatively bulging shape in the second state. The supporting capsule body 33 can be connected to the side surface of the electrode body 31 in a relatively flat shape in the first state, so the electrode body 31 can be easily wound to define the winding hole 32, and the supporting capsule body 33 is not prone to damage the electrode body 31. When the supporting capsule body 33 in the first state is located inside the formed winding hole 32, the fillers are then filled into the accommodating cavity 332, causing the accommodating cavity 332 to transition from the first state to the second state, so the supporting capsule body 33 in a bulged shape has a certain structure strength, allowing the supporting capsule body 33 to support the winding hole 32, making the electrode body 31 at the winding hole 32 less prone to collapse, thereby improving the operating stability and safety performance of the electrode assembly 3.

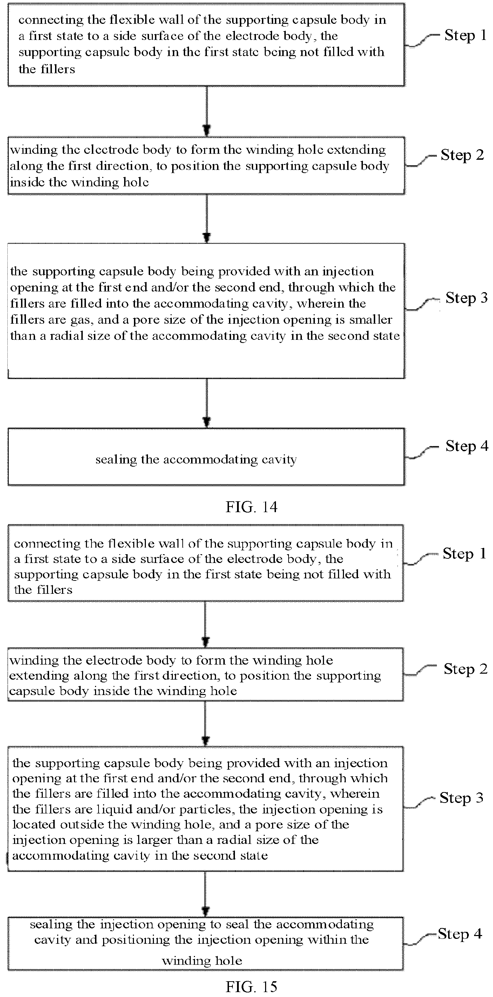

FIG. 14 is a schematic flowchart of a forming method in other embodiments of the present disclosure.

As shown in FIG. 14, in some embodiments, at step 3, the supporting capsule body 33 is provided with an injection opening at the first end 33a and/or the second end 33b, through which the fillers are filled into the accommodating cavity 332, wherein the fillers are gas, and a pore size of the injection opening is smaller than a radial size of the accommodating cavity 332 in the second state.

When the fillers are gas, by the pore size of the injection opening smaller than the radial size of the accommodating cavity 332 in the second state, it is difficult for gas to flow out of the accommodating cavity 332 from the injection opening with a smaller size when filling the accommodating cavity 332 through the injection opening, resulting in a higher filling efficiency when filling the accommodating cavity 332 through the injection opening.

FIG. 15 is a schematic flowchart of a forming method in other embodiments of the present disclosure.

As shown in FIG. 15, in some embodiments, at step 3, the supporting capsule body 33 is provided with an injection opening at the first end 33a and/or the second end 33b, through which the fillers are filled into the accommodating cavity 332, wherein the fillers are liquids and/or particles, the injection opening is located outside the winding hole 32, and a pore size of the injection opening is larger than a radial size of the accommodating cavity 332 in the second state; at step 4, the injection opening is sealed and located within the winding hole 32.

When the fillers are liquids and/or particles, by providing the pore size of the injection opening larger than the radial size of the accommodating cavity 332 in the second state, it is easier for liquids and/or particles to be filled into the accommodating cavity 332 through the injection opening with the larger size when the fillers are filled into the accommodating cavity 332 through the injection opening, thereby improving the filling efficiency of the liquids and/or particles. With the injection opening set inside the winding hole 32 after sealing the injection opening, the supporting capsule body is not prone to extend from the winding hole 32 out of the electrode body 31, making it less likely for the supporting capsule body to interfere with other devices outside the electrode body 31.

In a third aspect, some embodiments of the present disclosure provide a battery cell including any one of the aforementioned electrode assembly 3.

In a fourth aspect, some embodiments of the present disclosure provide a battery including multiple battery cells as mentioned above.

In a fifth aspect, some embodiments of the present disclosure provide an electrical apparatus including any one of the aforementioned battery for providing electrical energy.

Please refer to FIG. 5 to FIG. 10. According to some embodiments of the present disclosure, some embodiments of the present disclosure provide the electrode assembly 3 including the electrode body 31, the winding hole 32 and the supporting capsule body 33. The winding hole 32 is arranged to extend through the electrode body 31 in the first direction X. The supporting capsule body 33 is provided within the winding hole 32, configured to support the winding hole 32. A diameter of the supporting capsule body 33 is greater than or equal to 92% of a diameter of the winding hole 32 and less than or equal to a diameter of the winding hole 32. The supporting capsule body 33 includes the flexible wall 331 and the accommodating cavity 332 surrounded and defined by the flexible wall 331. The supporting cavity 332 includes the supporting cavity 332a and the buffer cavity 332b. The supporting cavity 332a is filled with fillers, and the fillers can be at least one of fire extinguishing gas, electrolyte, electrolyte solvent, porous material particles, polymer matrix composite material particles, plastic particles, composite ultralight material particles, carbon fiber particles, ultralight gas gel particles or flame retardant particles. The first sealing portion is provided between the buffer cavity 332b and the supporting cavity 332a. The supporting capsule body 33 has the first end 33a and the second end 33b opposite to each other in the first direction X. The second sealing portion is located at the first end 33a for sealing and defining the supporting cavity 332a, and a sealing strength of the second sealing portion 334 is greater than that of the first sealing portion 333. The supporting capsule body 33 further includes the reinforcing portion 335 protruding from and arranged on a side surface of the flexible wall 331 toward the winding hole 32 and/or the accommodating cavity 332. The reinforcing portion 335 is in shape of at least one of a spiral shape or a wavy shape that surrounds a periphery of the supporting capsule body 33 and extends along the first direction X.

It should be noted that, without conflict, the embodiments and features in the embodiments of the present disclosure can be combined with each other.

Finally, it should be noted that: the above embodiments are only used to illustrate, not to limit, the technical solution of the present disclosure. Although the present disclosure is described in detail with reference to the foregoing embodiments, those skilled in the art should understand that they may still modify the technical solutions described in the foregoing embodiments, or replace some of the technical features with equivalents, but these modifications or replacements do not depart the essence of the corresponding technical solutions from the gist and scope of the technical solutions of each embodiment of the present disclosure. Especially, as long as there is no structural conflict, the various technical features mentioned in respective embodiments can be combined in any way. The present disclosure is not limited to specific embodiments disclosed herein, but includes all technical solutions falling within the scope of the claims.

## Claims

1. An electrode assembly comprising:
an electrode body;
a winding hole arranged to extend through the electrode body in a first direction; and
a supporting capsule body provided within the winding hole, configured to support the winding hole, and comprising a flexible wall and an accommodating cavity surrounded and defined by the flexible wall,
wherein at least part of the accommodating cavity is filled with fillers for supporting the accommodating cavity.

2. The electrode assembly according to claim 1, wherein:
the supporting capsule body has a first end and a second end opposite each other in the first direction, a first sealing portion is provided between the first end and the second end, and the accommodating cavity comprises a supporting cavity and a buffer cavity that are not communicated with each other and located on two sides of the first sealing portion in the first direction, respectively; and
the fillers are filled in the supporting cavity, and the first sealing portion is configured for communicating the supporting cavity with the buffer cavity when a pressure in the supporting cavity is greater than or equal to a preset pressure value.

3. The electrode assembly according to claim 2, wherein the supporting capsule body further comprises a second sealing portion located at the first end and/or the second end and configured for sealing and defining the supporting cavity and/or the buffer cavity, and a sealing strength of the second sealing portion is greater than that of the first sealing portion.

4. The electrode assembly according to claim 1, wherein the supporting capsule body further comprises a reinforcing portion protruding from and arranged on a side surface of the flexible wall toward the winding hole and/or the accommodating cavity.

5. The electrode assembly according to claim 4, wherein the reinforcing portion extends along the first direction and/or along a peripheral direction of the supporting capsule body.

6. The electrode assembly according to claim 5, wherein the reinforcing portion is in shape of at least one of a spiral shape or a wavy shape that surrounds a periphery of the supporting capsule body and extends along the first direction.

7. The electrode assembly according to any one of claims 1 to 6, wherein the fillers are at least one of gases, liquids, or particles.

8. The electrode assembly according to any one of claims 1 to 6, wherein the fillers are at least one of fire extinguishing gases, electrolytes, electrolyte solvents, porous material particles, polymer matrix composite material particles, plastic particles, composite ultralight material particles, carbon fiber particles, ultralight gas gel particles or flame retardant particles.

9. The electrode assembly according to any one of claims 1 to 6, wherein the fillers are at least one of heptafluoropropane, mixed gases IG541, carbon dioxide, inert gases, aerosol fire extinguishing substances, electrolytes, electrolyte solvents, porous foam particles, porous ceramic particles, polymer matrix composite particles, polypropylene particles, polyethylene particles, polyphenylene sulfide particles, composite ultralight material particles, carbon fiber particles, carbon gas gel particles, polypropylene flame retardant particles, polycarbonate flame retardant particles, adhesive flame retardant particles, organic phosphide particles, halogenated carbonate particles, phosphazene compound particles, phosphate ester particles, or dimethyl methyl phosphate particles.

10. The electrode assembly according to any one of claims 1 to 6, wherein a diameter of the supporting capsule body is greater than or equal to 92% of a diameter of the winding hole and less than or equal to a diameter of the winding hole.

11. A forming method for forming the electrode assembly according to any one of claims 1 to 10, comprising:
connecting the flexible wall of the supporting capsule body in a first state to a side surface of the electrode body, the supporting capsule body in the first state being not filled with the fillers;
winding the electrode body to define the winding hole extending along the first direction, to position the supporting capsule body inside the winding hole;
filling the accommodating cavity with the fillers to deform the supporting capsule body into a second state, a size of the supporting capsule body in the second state being larger than that in the first state; and
sealing the accommodating cavity.

12. The forming method according to claim 11, wherein in the step of filling the accommodating cavity with the fillers to deform the supporting capsule body into a second state, a size of the supporting capsule body in the second state being larger than that in the first state:
the supporting capsule body is provided at a first end and/or a second end thereof with an injection opening, through which the fillers are filled into the accommodating cavity, wherein the fillers are gases, and a pore size of the injection opening is smaller than a radial size of the accommodating cavity in the second state.

13. The forming method according to claim 11, wherein:
in the step of filling the accommodating cavity with the fillers to deform the supporting capsule body into a second state, a size of the supporting capsule body in the second state being larger than that in the first state:
the supporting capsule body is provided at a first end and/or a second end thereof with an injection opening, through which the fillers are filled into the accommodating cavity, wherein the fillers are liquids and/or particles, the injection opening is located outside the winding hole, and a pore size of the injection opening is larger than a radial size of the accommodating cavity in the second state; and
in the step of sealing the accommodating cavity, the injection opening is sealed and located within the winding hole.

14. A battery cell comprising the electrode assembly according to any one of claims 1 to 10.

15. A battery comprising multiple battery cells as claimed in claim 14.

16. An electrical apparatus comprising the battery according to claim 15 for providing electrical energy.
